# EUROPÄISCHE PATENTANMELDUNG

(11) **EP 1 014 293 A2**
(43) Veröffentlichungstag der Anmeldung: **28.06.2000**
(21) Anmeldenummer: 99123812.2
(22) Anmeldetag: 01.12.1999
(51) Int. Cl.: G06K 9/20, G06F 3/033

(54) **Anordnung und Verfahren zur elektronischen Erfassung eines Schriftzuges, insbesondere einer Unterschrift**

(30) Priorität: 24.12.1998 DE 19859932
(71) Anmelder: H- Soft EDV GmbH, 70567 Stuttgart (DE)
(72) Erfinder: Härle, Werner, 70619 Stuttgart (DE); Bärnreuther, Robert, 91332 Heiligenstadt (DE)
(74) Vertreter: Pfiz, Thomas

(57) **Zusammenfassung**

Die Erfindung betrifft eine Anordnung und ein Verfahren zur elektronischen Erfassung eines Schriftzuges, insbesondere einer Unterschrift, mit einer mittels eines Schreibstiftes betätigbaren Abtasteinrichtung (12) zur punktuellen Abtastung von Koordinaten des Schriftzugs und/oder des Schreibdrucks und einer elektronischen Steuerschaltung (18) zur Umsetzung der Ausgangssignale der Abtasteinrichtung (12) in den Schriftzug charakterisierende Digitaldaten. Zur gleichzeitigen elektronischen Erfassung des Schriftzugs während des Schreibens wird vorgeschlagen, daß die Abtasteinrichtung (12) eine als Schreibunterlage ausgebildete Abtastfläche (14) und eine Markierung (16) zur lagerichtigen Positionierung des Schriftstücks auf der Abtastfläche (14) aufweist.

## Beschreibung

Die Erfindung betrifft eine Anordnung und ein Verfahren zur elektronischen Erfassung eines Schriftzuges, insbesondere einer Unterschrift, nach dem Oberbegriff des Patentanspruchs 1 bzw. 18.

Zur rechnergestützten Verarbeitung von Papierdokumenten ist es bekannt, diese über einen Scanner elektronisch zu erfassen und eine darauf vorhandene Unterschrift mittels Bildverarbeitung statisch auszuwerten. Damit ist es möglich, Schriftstücke in großer Anzahl, beispielsweise Schecks routinemäßig zu validieren. Weiter sind stiftbetätigte Eingabetableaus der vorstehend angegebenen Art bekannt, welche eine unmittelbare Aufzeichnung einer Unterschrift erlauben. Durch die zusätzliche zeitliche Dimension, in welcher die Unterschrift charakterisiert werden kann, ist eine verbesserte parametrische Unterschriftsprüfung möglich. Dabei macht man sich zunutze, daß aus den räumlichen und dynamischen Mustern ideographische Merkmale extrahierbar sind, die sich kaum gleichzeitig fälschen lassen. Nachteilig bei den genannten Digitalisiertableaus ist jedoch, daß die Unterschritt quasi in die Luft geschrieben ohne sichtbaren Abdruck erbracht wird. Weiter wird als nachteilig empfunden, daß für die unterschreibende Person keine authentische Papierkopie zur Verfügung steht, was aber bei Transaktion im Bereich von Banken und Versicherungen häufig wünschenswert ist.

Ausgehend hiervon liegt der Erfindung die Aufgabe zugrunde, eine Anordnung und ein Verfahren der eingangs genannten Art dahingehend zu entwickeln, daß ein auf einem beliebigen Papierdokument aufgebrachter Schriftzug zugleich elektronisch erfaßbar ist.

Zur Lösung dieser Aufgabe wird die im Patentanspruch 1 bzw. 18 angegebene Merkmalskombination vorgeschlagen. Vorteilhafte Ausgestaltungen und Weiterbildungen der Erfindung ergeben sich aus den abhängigen Ansprüchen.

Die Erfindung geht von dem Gedanken aus, den zu unterzeichnenden Teil eines Schriftstücks auf einer als Schreibunterlage ausgebildeten Abtastfläche lagerichtig anzuordnen und den Schriftzug durchschreibend abzutasten. Um dies zu ermöglichen, wird nach der Erfindung vorgeschlagen, daß die Abtasteinrichtung eine als Schreibunterlage ausgebildete Abtastfläche und eine Markierung zur lagerichtigen Positionierung des Schriftstücks auf der Abtastfläche aufweist. Damit ist es auf einfache Weise möglich, eine Unterschrift auf einem Dokument zugleich elektronisch zu registrieren und gegebenenfalls zu verifizieren, um so Verträge oder Transaktionen effizient zu dokumentieren.

Die Ausrichtung eines Schriftstücks auf einem enger begrenzten Abtastfeld wird dadurch wesentlich erleichtert, daß die Markierung durch das Schriftstück hindurch optisch und/oder tastend erfaßbar ist. Ein weiterer Vorteil in dieser Hinsicht wird dadurch erreicht, daß die Markierung im Randbereich der Abtastfläche angeordnet ist. Hinsichtlich einer einfachen Handhabung ist es von besonderem Vorteil, wenn die Markierung durch mindestens eine ein aufgelegtes Schriftstück vorzugsweise punkt- oder linienförmig durchleuchtende Lichtquelle gebildet ist. Dabei kann in baulich einfacher Ausgestaltung die Markierung durch mindestens eine Leuchtdiode gebildet sein. Vorteilhafterweise sind vier Leuchtdioden vorgesehen, welche in den Eckbereichen der rechteckigen Abtastfläche angeordnet sind. Eine weitere Verbesserung ergibt sich dadurch, daß Schaltmittel zum gegebenenfalls blinkenden Ein- und Ausschalten der Lichtquelle vorgesehen sind.

Alternativ oder ergänzend ist es möglich, daß die Markierung durch mindestens eine Erhebung oder Vertiefung im Randbereich der Abtastfläche gebildet ist. Eine weitere Möglichkeit besteht darin, daß die Markierung durch eine die Abtastfläche begrenzende oder überdekkende Kontrast- oder Leuchtfarbschicht gebildet ist.

Zur Erhöhung des Gebrauchswerts ist es von Vorteil, wenn die Abtasteinrichtung und die Steuerschaltung batteriegespeist in einer vorzugsweise als Klemmbrett ausgebildeten Schreibplatte angeordnet sind, wobei die Abtastfläche einen Teil der Auflagefläche der Schreibplatte bildet.

Zur Auswertung und Archivierung der ermittelten Digitaldaten ist es vorteilhaft, wenn die Steuerschaltung über eine Schnittstelle zur Datenübertragung vorzugsweise drahtlos mit einem Personalcomputer verbindbar ist. Denkbar ist es auch, daß die Abtasteinrichtung vorzugsweise als ausfahrbare Schublade im Gehäuse eines tragbaren Personalcomputers angeordnet ist.

Zur Vereinfachung der Bedienung können die Abtasteinrichtung und die Steuerschaltung über einen Personalcomputer in Betriebsbereitschaft versetzbar sind. Eine weitere Verbesserung wird dadurch erreicht, daß die Betriebsbereitschaft der Abtasteinrichtung und der Steuerschaltung über eine zugleich die Markierung bildende Lichtquelle anzeigbar ist.

Vorteilhafterweise weist die Abtastfläche zur dynamischen Erfassung des Schriftzuges mindestens eine an der momentanen Andrückstelle eines Schreibstifts mit einer Leiterschicht kontaktierbare Widerstandsschicht auf. Weiter ist es von Vorteil, wenn die Steuerschaltung einen über einen Analog-Digital-Wandler mit der Abtasteinrichtung gekoppelten Mikrocontroller aufweist. Dabei kann auf dem Mikrocontroller eine Programmroutine zur Verschlüsselung und/oder Komprimierung der Digitaldaten geladen sein.

In verfahrensmäßiger Hinsicht wird die eingangs genannte Aufgabe dadurch gelöst, daß ein zu beschriftender Teil des Schriftstücks auf einer eine Schreibunterlage bildenden Abtastfläche der Abtasteinrichtung lagerichtig positioniert wird, wobei die Lage der Abtastfläche über eine durch das Schriftstück hindurch erkennbare Markierung erfaßt wird, und daß der Schriftzug während des Schreibens auf dem Schriftstück über die darunterliegende Abtastfläche abgetastet wird.

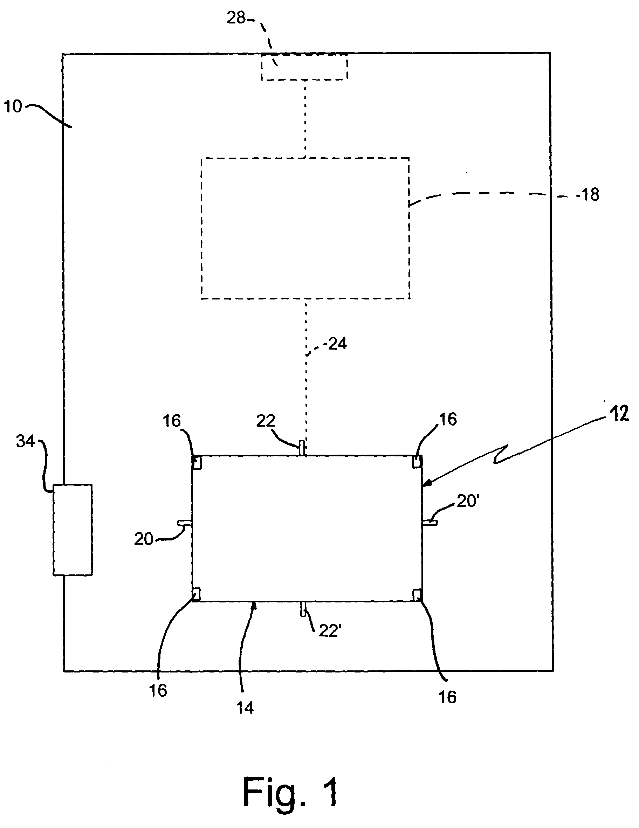

Im folgenden wird die Erfindung anhand eines in der Zeichnung in schematischer Weise dargestellten Ausführungsbeispiels näher erläutert. Es zeigen
- Fig. 1: eine Anordnung zur elektronischen Erfassung einer Unterschrift in einer Draufsicht; und
- Fig. 2: ein Blockschaltbild der Anordnung nach Fig. 1.

Die in der Zeichnung dargestellte Anordnung besteht im wesentlichen aus einer Schreibplatte 10, einer darin angeordneten Abtasteinrichtung 12, die eine Abtastfläche 14 und eine Markierung 16 umfaßt, sowie aus einer Steuerschaltung 18.

Die im Umriß rechteckige Abtastfläche 14 ist breitseitig auf der Schreibplatte 10 angeordnet. Sie umfaßt in bekannter Weise eine Widerstandsschicht, die mittels eines Schreibstifts an der momentanen Andrückstelle mit einer Leiterschicht kontaktierbar ist (nicht gezeigt). Der elektrische Widerstand des Strompfads durch die Widerstands- und Leiterschicht ist dabei nach Art eines Potentiometers durch die Schreibbewegung veränderlich. Zur dynamischen Bestimmung der X-Y-Koordinaten des Schriftzugs lassen sich entsprechende Stromsignale in den Koordinatenrichtungen an Abgriffkontakten 20, 20' und 22, 22' abgreifen.

Die Markierung besteht aus vier Leuchtdioden 16, die in den Eckbereichen der Abtastfläche 14 angeordnet sind und somit den sensitiven Bereich für die Schrifterfassung durch ein aufgelegtes Schriftstück hindurch visualisieren. Die Leuchtdioden 16 und die Abgriffe 20, 20', 22, 22' der Abtastfläche 14 sind über eine nur symbolisch dargestellte Leitung 24 mit der in die Schreibplatte 10 eingesetzten Steuerschaltung 18 verbunden.

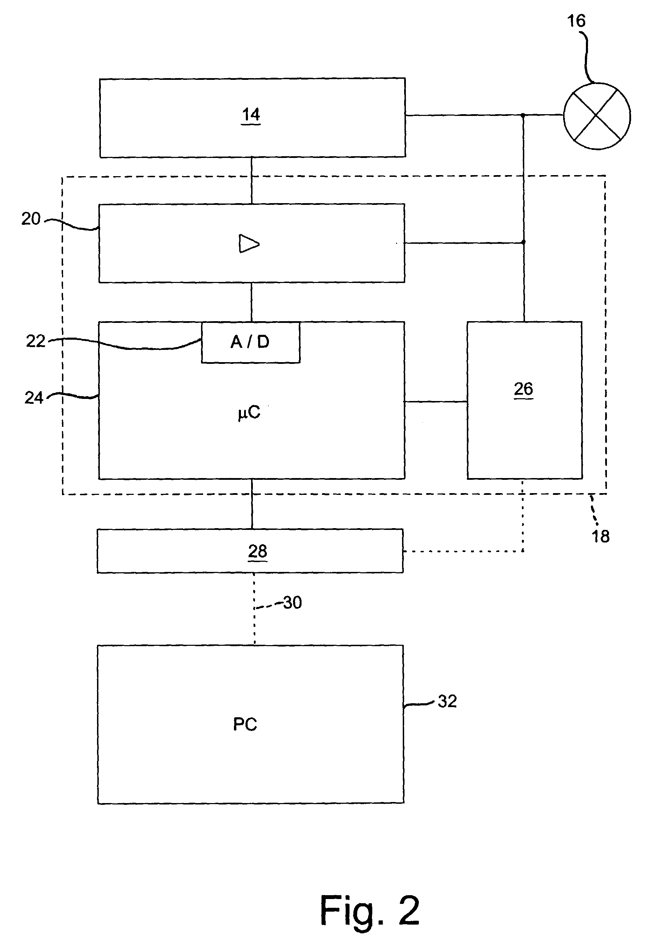

Wie in Fig. 2 gezeigt, umfaßt die Steuerschaltung 18 eine Eingangsstufe 20 zur analogen Aufbereitung der abgegriffenen Stromsignale, einen über einen Analog-Digital-Wandler 22 mit den Analogsignalen beaufschlagbaren Mikrocontroller 24 und eine schaltbare Energieversorgungsstufe 26. Der Mikrocontroller 24 übernimmt Steuerfunktionen zur Ansteuerung der Abtastfläche 14 sowie gegebenenfalls der Leuchtdioden 16 und ermöglicht eine Vorverarbeitung der eingespeisten Digitaldaten beispielsweise zur Bestimmung zusätzlicher zeitaufgelöster Charakteristika des Schriftzugs wie Schreibgeschwindigkeit und Beschleunigung. Zur Übertragung der gewonnenen Digitaldaten und gegebenenfalls von Steuerbefehlen ist die Steuerschaltung 18 über eine Schnittstelle 28 und eine Funkstrecke 30 mit einem Personalcomputer 32 verbindbar. Durch Ansteuerung der Energieversorgungsstufe 26 über den Personalcomputer 32 ist es auch möglich, die Steuerschaltung 18 und die Abtasteinrichtung 12 in Betriebsbereitschaft zu versetzen.

Das vorgesehene Unterschriftsfeld des zu unterzeichnenden Schriftstücks läßt sich lagerichtig auf der Abtastfläche 14 positionieren, indem deren Lage über die durch das Schriftstück hindurchleuchtenden Leuchtdioden 16 optisch erfaßt wird. Gegebenenfalls kann dann das positionierte Schriftstück auf der Schreibplatte 10 mittels eines daran angebrachten Clips 34 fixiert werden. Anschließend wird die Unterschrift mittels eines beliebigen Schreibstifts auf das Unterschriftsfeld aufgebracht, wobei zugleich die momentane Andrückstelle an der darunterliegenden Abtastfläche 14 sequentiell abgetastet wird.

## Patentansprüche

1. Anordnung zur elektronischen Erfassung eines Schriftzuges, insbesondere einer Unterschrift, mit einer mittels eines Schreibstiftes betätigbaren Abtasteinrichtung (12) zur punktuellen Abtastung von Koordinaten des Schriftzugs und/oder des Schreibdrucks während des Schreibens und einer elektronischen Steuerschaltung (18) zur Umsetzung der Ausgangssignale der Abtasteinrichtung (12) in den Schriftzug charakterisierende Digitaldaten, **dadurch gekennzeichnet**, daß die Abtasteinrichtung (12) eine als Schreibunterlage ausgebildete Abtastfläche (14) und eine Markierung (16) zur lagerichtigen Positionierung des Schriftstücks auf der Abtastfläche (14) aufweist.

2. Anordnung nach Anspruch 1, **dadurch gekennzeichnet**, daß die Markierung (16) durch das Schriftstück hindurch optisch und/oder tastend erfaßbar ist.

3. Anordnung nach Anspruch 1 oder 2, **dadurch gekennzeichnet**, daß die Markierung (16) im Randbereich der Abtastfläche (14) angeordnet ist.

4. Anordnung nach einem der Ansprüche 1 bis 3, **dadurch gekennzeichnet**, daß die Markierung durch mindestens eine ein aufgelegtes Schriftstück vorzugsweise punkt- oder linienförmig durchleuchtende Lichtquelle (16) gebildet ist.

5. Anordnung nach einem der Ansprüche 1 bis 4, **dadurch gekennzeichnet**, daß die Markierung durch mindestens eine Leuchtdiode (16) gebildet ist.

6. Anordnung nach einem der Ansprüche 1 bis 5, **dadurch gekennzeichnet**, daß die Markierung vier Leuchtdioden (16) aufweist, welche in den Eckbereichen der rechteckigen Abtastfläche (14) angeordnet sind.

7. Anordnung nach einem der Ansprüche 4 bis 6, **gekennzeichnet durch** Schaltmittel (26) zum gegebenenfalls blinkenden Ein- und Ausschalten der Lichtquelle.

8. Anordnung nach einem der Ansprüche 1 bis 3, **dadurch gekennzeichnet**, daß die Markierung (16) durch mindestens eine Erhebung oder Vertiefung im Randbereich der Abtastfläche (14) gebildet ist.

9. Anordnung nach einem der Ansprüche 1 bis 3, **dadurch gekennzeichnet**, daß die Markierung (16) durch eine die Abtastfläche (14) begrenzende oder überdeckende Kontrast- oder Leuchtfarbschicht gebildet ist.

10. Anordnung nach einem der Ansprüche 1 bis 9, **dadurch gekennzeichnet**, daß die Abtasteinrichtung (12) und die Steuerschaltung (18) batteriegespeist in einer vorzugsweise als Klemmbrett ausgebildeten Schreibplatte (10) angeordnet sind, wobei die Abtastfläche (14) einen Teil der Auflagefläche der Schreibplatte (10) bildet.

11. Anordnung nach einem der Ansprüche 1 bis 10, **dadurch gekennzeichnet**, daß die Steuerschaltung (18) über eine Schnittstelle (28) zur Datenübertragung vorzugsweise drahtlos mit einem Personalcomputer (32) verbindbar ist.

12. Anordnung nach einem der Ansprüche 1 bis 9, **dadurch gekennzeichnet**, daß die Abtasteinrichtung (12) vorzugsweise als ausfahrbare Schublade im Gehäuse eines tragbaren Personalcomputers angeordnet ist.

13. Anordnung nach einem der Ansprüche 1 bis 12, **dadurch gekennzeichnet**, daß die Abtasteinrichtung (12) und die Steuerschaltung (18) über einen Personalcomputer (32) in Betriebsbereitschaft versetzbar sind.

14. Anordnung nach einem der Ansprüche 1 bis 13, **dadurch gekennzeichnet**, daß die Betriebsbereitschaft der Abtasteinrichtung (12) und der Steuerschaltung (18) über eine zugleich die Markierung bildende Lichtquelle (16) anzeigbar ist.

15. Anordnung nach einem der Ansprüche 1 bis 14, **dadurch gekennzeichnet**, daß die Abtastfläche (14) zur dynamischen Erfassung des Schriftzuges mindestens eine an der momentanen Andrückstelle eines Schreibstifts mit einer Leiterschicht kontaktierbare Widerstandsschicht aufweist.

16. Anordnung nach einem der Ansprüche 1 bis 15, **dadurch gekennzeichnet**, daß die Steuerschaltung (18) einen über einen Analog-Digital-Wandler (22) mit der Abtasteinrichtung (12) gekoppelten Mikrocontroller (24) aufweist.

17. Anordnung nach Anspruch 16, **dadurch gekennzeichnet**, daß der Mikrocontroller (24) eine Programmroutine zur Verschlüsselung und/oder Komprimierung der Digitaldaten aufweist.

18. Verfahren zur elektronischen Erfassung eines Schriftzuges, insbesondere einer Unterschrift, bei welchem die Koordinaten des Schriftzugs und/oder der Schreibdruck während des Schreibens mittels einer Abtasteinrichtung (12) punktuell abgetastet werden und die Ausgangssignale der Abtasteinrichtung (12) in einer elektronischen Steuerschaltung (18) in den Schriftzug charakterisierende Digitaldaten umgesetzt werden, **dadurch gekennzeichnet**, daß ein zu beschriftender Teil des Schriftstücks auf einer eine Schreibunterlage bildenden Abtastfläche (14) der Abtasteinrichtung (12) lagerichtig positioniert wird, wobei die Lage der Abtastfläche (14) über eine durch das Schriftstück hindurch erkennbare Markierung (16) erfaßt wird, und daß der Schriftzug während des Schreibens auf dem Schriftstück über die darunterliegende Abtastfläche (14) abgetastet wird.
